# EUROPEAN PATENT APPLICATION

(11) **EP 0 785 528 A2**
(43) Date of publication of application: **23.07.1997**
(21) Application number: 96203548.1
(22) Date of filing: 14.12.1996
(51) Int. Cl.: G06T 3/40

(54) **Poster making system**

(30) Priority: 03.01.1996 US 582549
(71) Applicant: EASTMAN KODAK COMPANY, Rochester, New York 14650 (US)
(72) Inventor: Leone, III, Anthony J., Rochester, New York 14650-2201 (US)
(74) Representative: Blickle, K. Werner, Dipl.-Ing.

(57) **Abstract**

An article of manufacture comprising a computer usable medium having computer readable program code embodied therein for causing a poster-sized image to be produced from a digital representation of an image independent of performing manually-manipulated, sequential processing steps, the computer readable program code comprises computer readable program code for causing a computer to automatically, upon receiving a poster size, perform bilinear scaling on each pixel of the digital representation for scaling each pixel of the digital representation to a predetermined matrix of pixels suitable for poster printing. The computer readable program code also causes the computer to automatically, without user intervention, after the scaling step, perform halftoning on the scaled matrix of pixels for producing a visual effect of a continuous tone. The computer readable program code further causes the computer to send, for each line of the poster, predetermined sequential binary code values to each color generator on a raster printer.

## Description

### Appendix

The disclosure in the appendix of this patent disclosure of this patent document contains material to which a claim of copyright protection is made. The copyright owner has no objection to the facsimile reproduction of any one of the patent documents or the patent disclosure, as it appears in the U.S. Patent and Trademark Office patent file or records, but reserves all other rights whatsoever.

### Field of The Invention

The invention relates generally to the field of printing a poster-sized image through digital processing and, more particularly, to printing such a poster-sized image automatically by a special purpose computer upon specifying a print size.

### Background Of The Invention

A conventional photography-based system for creating poster-sized images includes capturing an image, typically by a camera, on light-sensitive film by exposing it to incident light. The exposed film is chemically processed by a photofinisher for creating photographs from the film, and for converting the film into non-light sensitive negatives, as is well known in the art. Either the negatives or prints may then be converted into poster-sized images by well known dark-room techniques. As is also well known in the art, dark rooms are required to be maintained in a controlled environment, and the chemical process retires specialized equipment.

A conventional digital system for creating poster-sized images typically includes a computer workstation having a scanner for digitizing a photograph and for inputting the digital representation into a central processing unit (CPU). A software package, such as "ADOBE PHOTOSHOP" software, is implemented by the CPU via a plurality of input commands, which are inputted from both a keyboard and a mouse. A display monitor is connected to the CPU, and displays the image during its various stages of modification. As is typical of most software programs, imaging software packages either require a significant amount of time to become efficient with it, or require the use of a desktop publisher.

Although the presently known and utilized systems are satisfactory, they are not without drawbacks. Conventional photography-based systems are difficult, labor intensive, time consuming and expensive because of the requirement of controlling the environment of the dark room, and also because of the expense of obtaining and maintaining specialized equipment. In addition, such systems also produce undesirable effects such as distortion, graininess and loss of sharpness. Conventional digital systems also have shortcomings because they typically require the use of one skilled in the art of desktop image production.

Consequently, a need exists for improvements in the construction and mode of operating of the above-described systems so as to overcome the previously-described drawbacks.

### Summary of The Invention

The present invention is directed to overcoming one or more of the problems set forth above. Briefly summarized, according to one aspect of the present invention, an article of manufacture comprising; a computer usable medium having computer readable program code means embodied therein for causing a poster-sized image to be produced from a digital representation of an image independent of performing manually-manipulated, sequential processing steps, the computer readable program code means in said article of manufacture comprises; computer readable program code means for causing a computer to automatically, upon receiving a poster size, perform bilinear scaling on each pixel of the digital representation for scaling each pixel of the digital representation to a predetermined matrix of pixels suitable for poster printing; computer readable program code means for causing the computer to automatically, without user intervention, after said scaling step, perform halftoning on the scaled matrix of pixels for producing a visual effect of a continuous tone; and computer readable program code means for causing the computer to send, for each line of the poster, predetermined sequential binary code values to each color generator on a raster printer.

It is an object of the invention to provide a system of creating poster-sized images which are easily created by one having minimal computer skills.

It is an advantage of the present invention to provide a system for creating poster-sized images which utilizes standard computer hardware.

It is a feature to provide computer readable program code means for causing the computer to automatically, after a scaling step and without user intervention, perform halftoning on a scaled matrix of pixels for producing a visual effect of a continuous tone.

The above and other objects of the present invention will become more apparent when taken in conjunction with the following description and drawings wherein identical reference numerals have been used, where possible, to designate identical elements that are common to the figures.

### Brief Description Of The Drawings

Fig. 1 is a perspective view of a computer system for implementing the present invention;
Fig. 2 is a flowchart of a software program of the present invention; and
Fig. 3 is a detailed illustration of a portion of the software program, more particularly bilinear scaling.

### Detailed Description Of The Invention

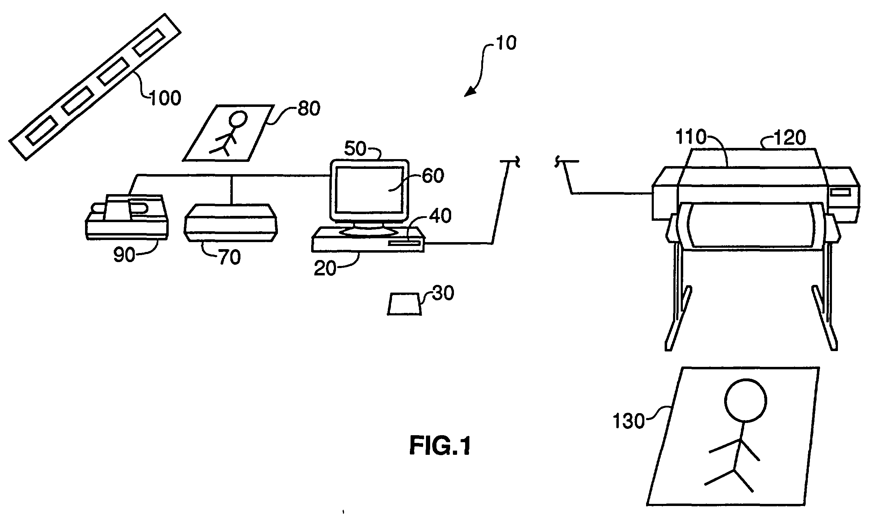

Referring to Fig. 1, there is illustrated a computer system 10 for implementing the present invention. Although the computer system 10 is shown for the purpose of illustrating a preferred embodiment, the present invention is not limited to the computer system 10 shown, but may be used on any electronic processing system (for example a "KODAK" Digital Processor 1000 processor unit). The computer system 10 includes a microprocessor based unit 20 or, as referred to in the art as a central processing unit (CPU) 20, for receiving and processing software programs and performing other well known processing functions. The software programs may be provided on a computer usable medium 30, such as a floppy disk 30, and are inputted into the CPU 20 by inserting the disk 30 into a slot 40 into the CPU 20. Alternatively, the programs may be permanently stored either on an electronic memory (not shown) of the CPU 20 or on a hard disk drive (not shown) of the CPU. A touch-sensitive monitor 50 is electronically connected to the CPU 20 for displaying user related information associated with the software. The touch-sensitive monitor 50 includes a screen 60 having text and symbols, an icon (not shown), thereon for defining a particular input command, and is activated by touching the icon for communicating the input command to the software program. This input directs the software to implement pre-defined steps associated with the particular input command. It is instructive to note that the touch-sensitive monitor 50 permits the elimination of a keyboard or mouse, both well known in the art, for inputting commands.

A scanner 70 is electrically connected to the CPU 20 for receiving a photographic image 80 and converting it into an electronic digitized representation of the image, which is transmitted to the CPU 20 for further processing. A film scanner 90 may also be electrically connected to the CPU 20 and receives conventional photographic film 100 for converting it into an electronic digitized representation of the image or images thereon, which representation is also transmitted to the CPU 20 for further processing.

A large format printer 110, such as a raster printer 110, is electrically connected to the CPU 20 for receiving an unprocessed or, more typically, a processed digital representation of the image, which enables the printer 110 to print a hardcopy of the image onto paper 120. The printer 110 is typically a cyan, magenta and yellow (CMY) printer 110 having a color head for each of its colors, three in the preferred embodiment illustrated herein. Each color head dispenses its respective color onto the paper 120 during the printing process. The printer typically prints a poster-sized image, which is typically an image printed on paper having a size of 3 feet by the footage of the length of the paper, 100 feet in the preferred embodiment.

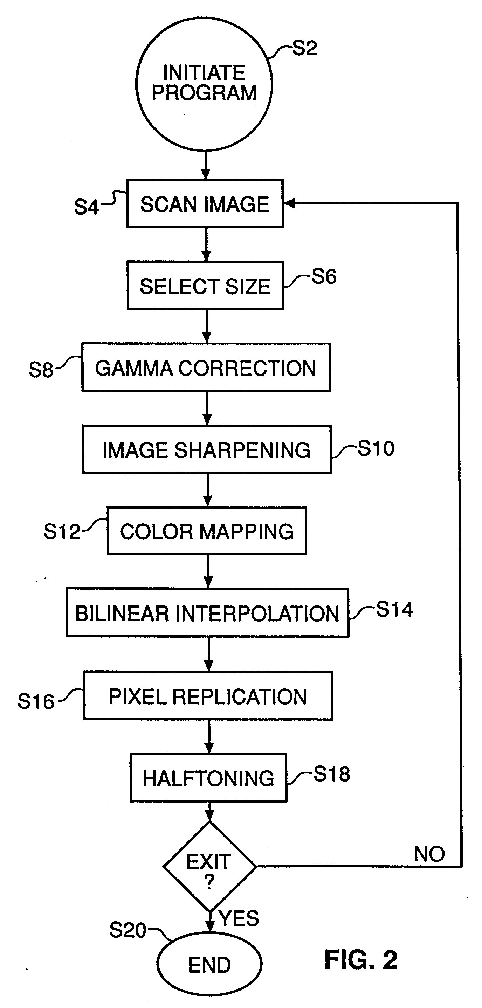

Before discussing the software program of the present invention, it is instructive to note that the software program is either permanently stored on the electronic memory of the CPU 20 or stored on the floppy disk 30 which is then inserted into the CPU 20 and stored in the memory. It further facilitates understanding of the present invention to understand that the software program manipulates the digital representation of the image. Referring now to Fig. 2, the program is preferably already installed S2, and is simply in a standby mode. The photographic image 80 is scanned S4 by the print scanner 70 and is converted into a plurality of picture elements (pixels) and, more particularly, into a 24 bit red, green and blue (RGB) digital representation as is well known in the art. Typically, the entire range of colors is represented by a value of between 0 to 255. The user then selects the poster size S6 by pressing the portion of the screen 60 having the desired icon for implementing the desired size. It facilitates understanding to know that the software program hereafter implements the below-described steps without further user input or intervention. This digital representation is then gamma corrected S8, as disclosed in *The Image Processing Handbook*, Second Edition by John C. Russ, for linearly distributing the code values against density. The gamma corrected image is then image sharpened S10, such as by a 3x3 finite impulse response matrix, as also disclosed in the previously referenced *The Image Processing Handbook*, for further defining edges, corners and the like.

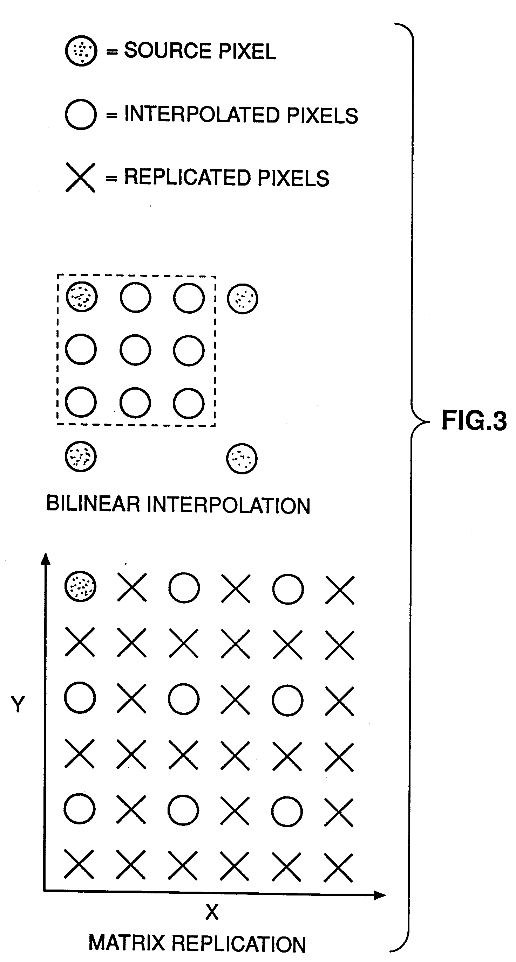

The digital representation is then converted S12 into the color space of the printer 110, typically CMY, by using a look-up table. As is obvious to those skilled in the art, the look-up table includes a one-to-one correspondence between the RGB color space and the CMY color space, and is stored on the electronic memory. Each pixel of the digital representation is thereafter bilinearly interpolated S14 into a predetermined initial matrix which size is determined according to the size of the poster previously selected. It is instructive to note that the initial matrix is usually one fourth of the required size for facilitating speed of computation, and will be further expanded into a final matrix as described in detail below. Referring briefly to Fig. 3, an example of interpolating into a 3x3 matrix is illustrated, which matrix is used on a poster size of 3 feet by 4 feet. The source pixels represent pixels generated from the color mapping step, and the interpolated pixels are generated from the bilinear interpolation. Bilinear interpolation includes multidimensional interpolation, as disclosed in "Numerical Recipes in C", *The Art of Scientific Computing by Press*, Flannery, Trukolsky and Vettering. This matrix is then two dimensionally replicated S16 for expanding the 3x3 matrix into the final matrix. Matrix replication is accomplished by first replicating each matrix value and inserting it directly adjacent and to the right of the original value in the x direction. The newly created pixels are illustrated as the replicated pixels. This newly created line is then duplicated directly below the newly created line so that there are two horizontal lines which are exactly the same. The above-described replication is performed on each line of the initial matrix until the entire matrix is replicated.

Referring back to Fig. 2, a halftoning operation S18 is performed on the digital representation for creating a visual effect of a continuous tone when the image is printed. The preferred method of halftoning is error diffusion such as that disclosed in Floyd and Steinberg, "An Adaptive Algorithm for Spatial Greyscale" Proceedings of the S.I.D. Volume 17, No.2 (1976) pp. 75-77 (ISSN:0734-1768). The halftoned digital representation is then sent to the raster printer 110 for printing. The digital representation is sent in blocks of data so that each color header receives its data in a predefined sequence for each line of the image for allowing each color header to either withhold or dispense its color at each location on the paper 120. The printer 110 prints each line sequentially until the entire predetermined poster-sized image 130 is printed.

The user may then either exit S20 the program or process another image and return to step S2.

### Parts List:

- 10: computer system
- 20: microprocessor
- 30: medium
- 40: slot
- 50: monitor
- 60: screen
- 70: scanner
- 80: image
- 90: scanner
- 100: film
- 110: printer
- 120: paper
- 130: image

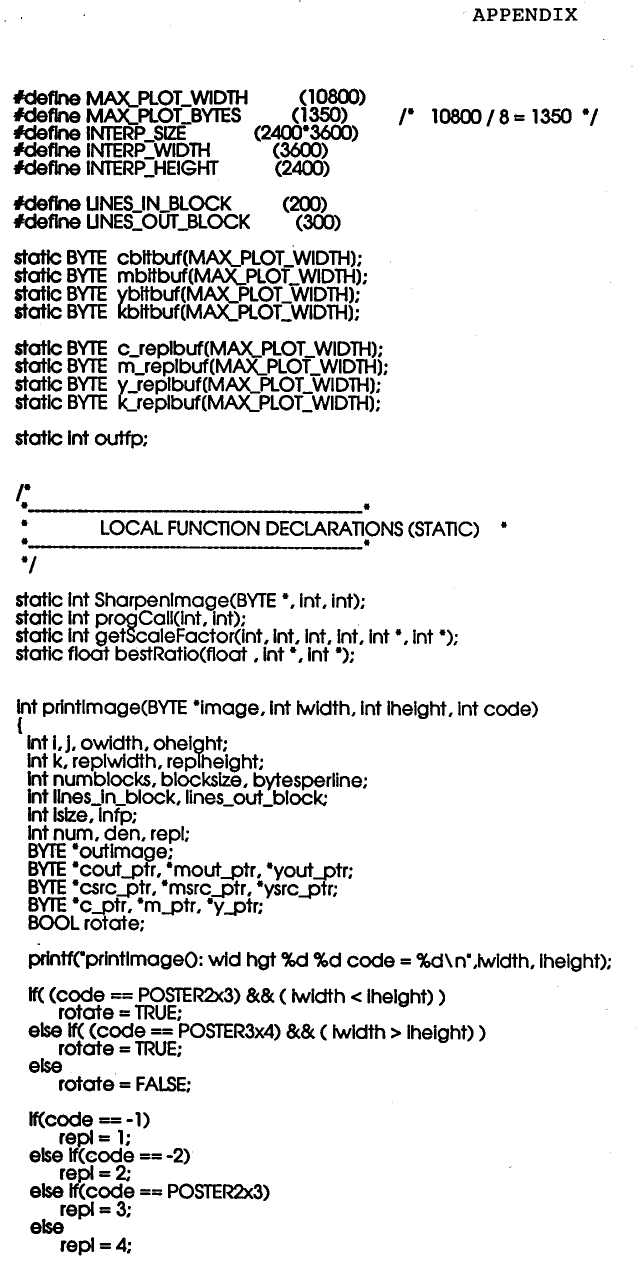

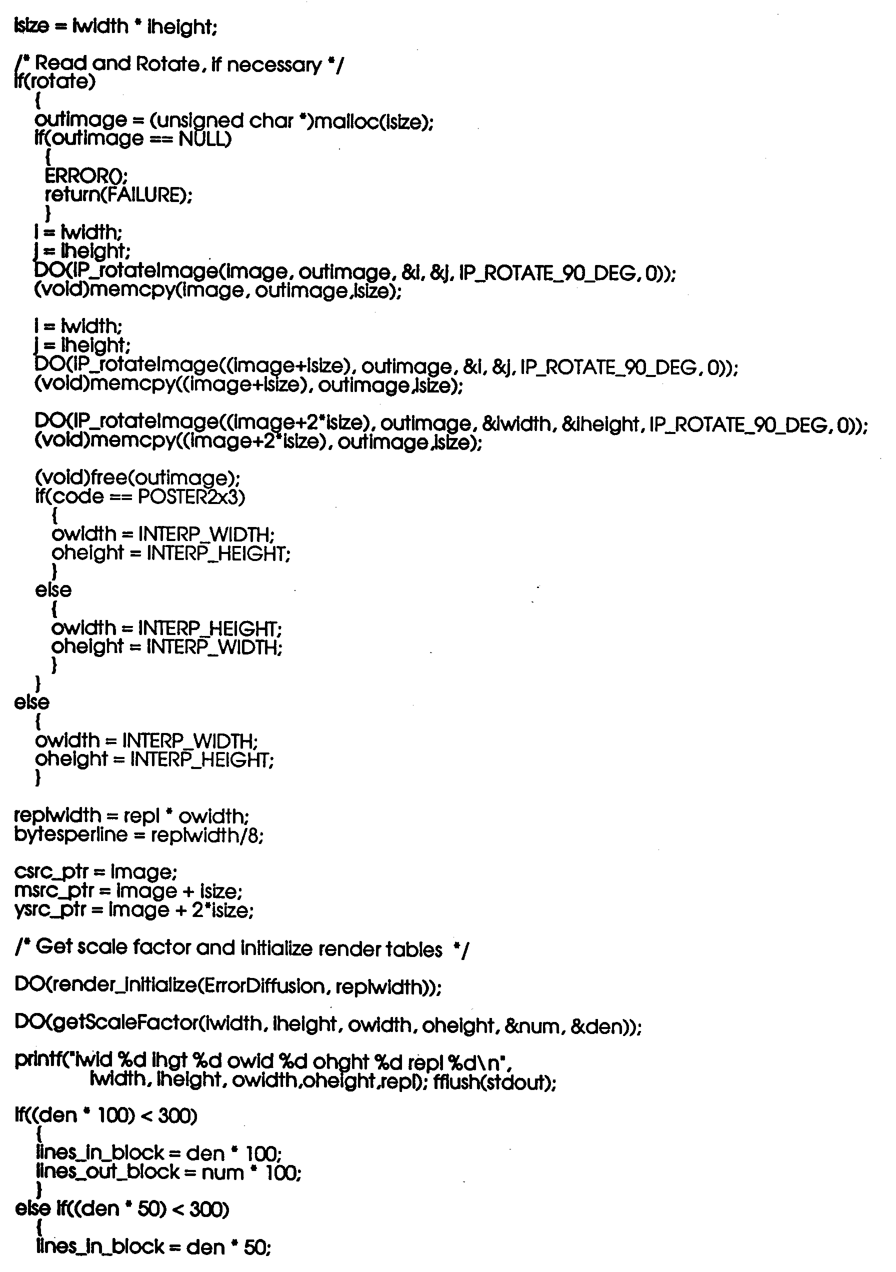

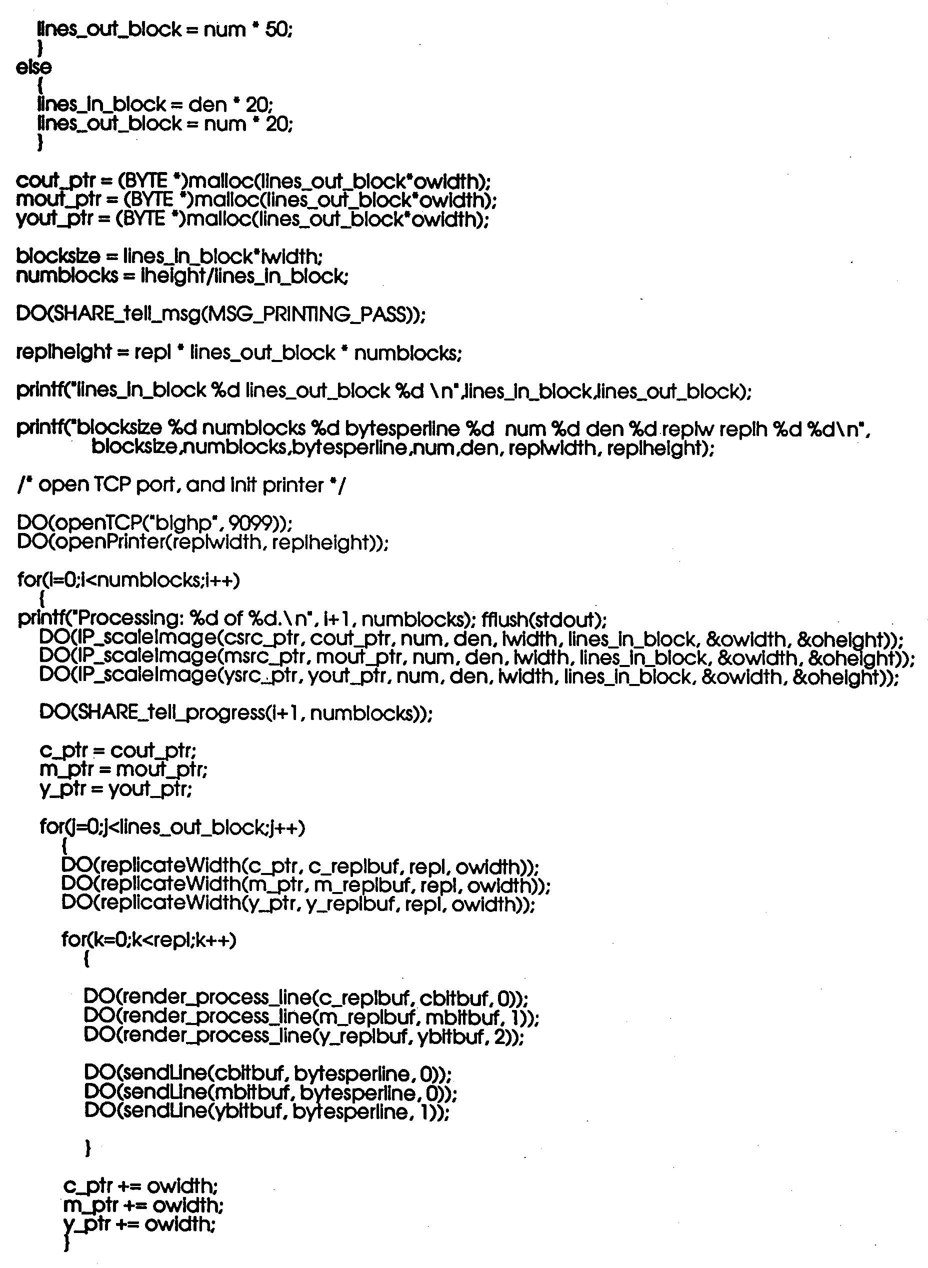

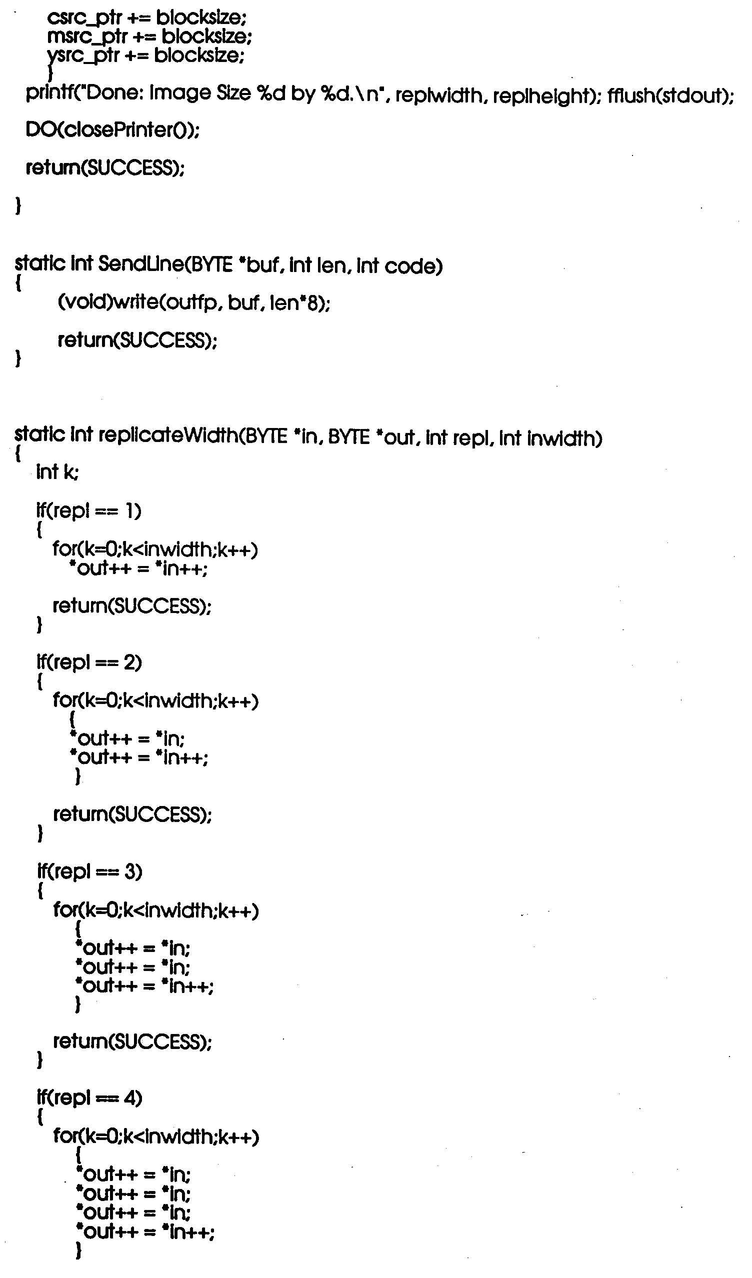

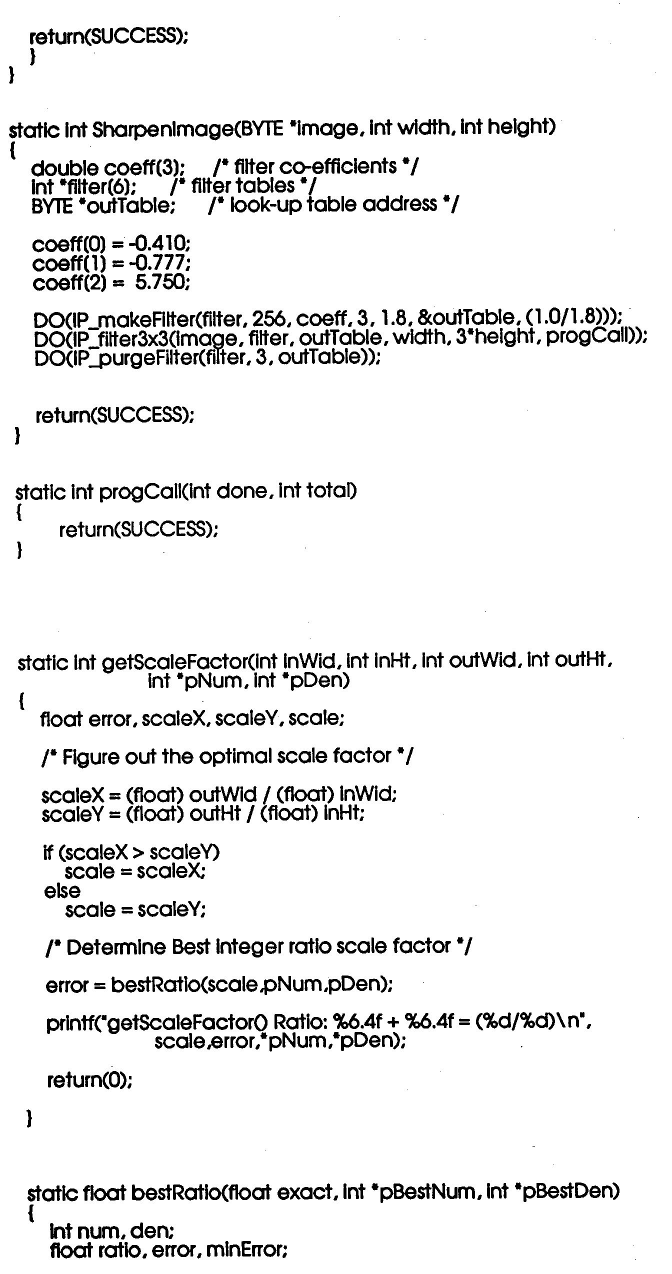

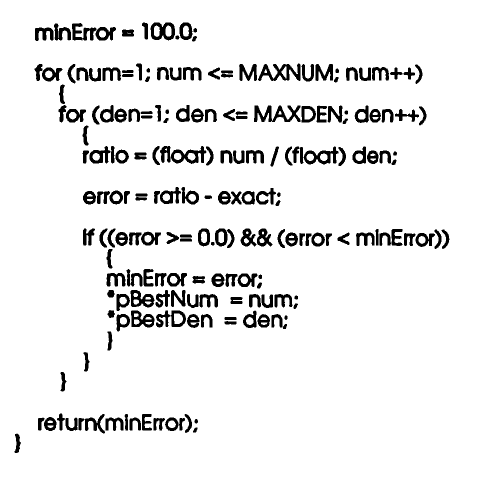

## Claims

1. An article of manufacture comprising;
a computer usable medium having computer readable program code means embodied therein for causing a poster-sized image to be produced from a digital representation of an image independent of performing manually-manipulated, sequential processing steps, the computer readable program code means in said article of manufacture comprising;
computer readable program code means for causing a computer to automatically, upon receiving a poster size, perform bilinear scaling on each pixel of the digital representation for scaling each pixel of the digital representation to a predetermined matrix of pixels suitable for poster printing;
computer readable program code means for causing the computer to automatically, without user intervention, after said scaling step, perform halftoning on the scaled matrix of pixels for producing a visual effect of a continuous tone; and
computer readable program code means for causing the computer to send, for each line of the poster, predetermined sequential binary code values to each color generator on a raster printer.

2. The article of manufacture as in claim 1 further comprising computer readable program code means for causing the computer to automatically, before initiation of said causing the computer to send values to printer and without user intervention, perform color mapping for converting a first color space of the digital representation into a second color space of the digital representation.

3. The article of manufacture as in claim 2 further comprising computer readable program code means for causing the computer to automatically, before initiation of said causing the computer to send values to printer and without user intervention, perform image sharpening to the digital representation.

4. The article of manufacture as in claim 3 further comprising computer readable program code means for causing the computer to automatically, before initiation of said causing the computer to send values to printer and without user intervention, perform gamma correction on the digital representation.

5. The article of manufacture as in claim 3 wherein said image sharpening step includes sharpening by using a 3 x 3 finite impulse response matrix.

6. A system for causing a poster-sized image to be created from a digital representation of an image independent of performing manually-manipulated, sequential processing steps via a keyboard or mouse, the system comprising:
(a) a central processing unit for performing software-initiated processing steps on the digital representation, which steps are performed automatically in a predetermined sequence once a poster size is designated;
wherein said central processing unit includes means for automatically, upon receiving input designating a poster size, implementing bilinear scaling on each pixel of the digital representation for scaling each pixel of the digital representation to a predetermined matrix of pixels suitable for poster printing, and further includes means for automatically, after the scaling step and without user intervention, implement halftoning on the scaled matrix of pixels for producing a visual effect of a continuous tone;
(b) means for inputting the digital representation of the image into the central processing unit;
(c) a touch screen electrically connected to said central processing unit for displaying a plurality of poster-sized images which may be produced and for receiving input by touching said screen on the desired poster-sized image; and
(d) a raster printer for receiving data in a predetermined sequential order respectively to each color header of said printer for each line of the image from said central processing unit, which data enables said printer to print the poster-sized image.

7. The system as in claim 6, wherein said central processing unit includes means for automatically, without user intervention and before printing the poster-sized image, performing color mapping for converting a first color space of the digital representation into a second color space of the digital representation.

8. The system as in claim 7, wherein said central processing unit includes means for automatically, without user intervention and before printing the poster-sized image, performing image sharpening to the digital representation.

9. The system as in claim 8, wherein said means for image sharpening includes means for sharpening by using a 3 x 3 finite impulse matrix.
